# EUROPEAN PATENT SPECIFICATION

(11) **EP 1 559 583 B1**
(45) Date of publication and mention of the grant of the patent: **17.06.2009**
(21) Application number: 04425048.8
(22) Date of filing: 27.01.2004
(51) Int. Cl.: B60B 1/00

(54) **Spoke for a bicycle wheel, wheel and method for manufacturing such a spoke**
Speiche für ein Fahrrad, Rad und Verfahren zur Herstellung einer solchen Speiche
Rayon pour une roue de bicyclette, roue et procédé de fabrication d'un tel rayon

(43) Date of publication of application: 03.08.2005
(73) Proprietor: CAMPAGNOLO S.R.L., I-36100 Vicenza (IT)
(72) Inventor: Passarotto, Maurizio, 45100 Rovigo (IT); Meggiolan, Mario, 36051 Creazzo (Vicenza) (IT)
(74) Representative: Castiglia, Paolo

(56) References cited:
- WO-A-03/018331
- BE-A- 1 003 715
- DE-U- 8 122 881
- FR-A- 2 767 749
- US-A- 3 894 777
- US-A1- 2003 062 763

## Description

The present invention relates to a spoke for a bicycle wheel. More specifically, the invention relates to a spoke for a bicycle wheel made of metallic material, a bicycle wheel comprising a plurality of such spokes and a method for manufacturing such a spoke.

Known spokes commonly used to realise bicycle wheels consist of substantially wire-shaped elements, generally made of metal like steel or aluminium, which are mounted between the central part of the wheel consisting of the hub and the rim on which the tire is mounted.

A type of spoke commonly used consists of a cylindrical wire-shaped element, with a diameter in the order of a few millimetres, with a widened head for the attachment in suitable seats of the hub and a threaded head for the attachment, through nipples, to the rim.

During travel, considering the small size of the spokes and therefore the small surface that they occupy in the plane of the wheel in which they are arranged, the rotation of the wheel determines the reduction in visibility of the spokes themselves.

A reduced visibility of the spokes determines the reduction in visibility of the wheel and therefore also the reduction in visibility of the bicycle. Such a fact determines a worsening of the safety conditions for the cyclist, for example when the road being travelled upon is very busy or else in the case of low visibility due to fog.

A known solution proposed to increase the visibility of the wheel consists of the application of plastic plates, possibly coloured, on the spoke.

Such a solution, however, has some drawbacks.

A first drawback lies in the fact that plates worsen the aerodynamics of the spoke and of the wheel, as well as increasing the noise, during rotation, due to air turbulence.

Another drawback is represented by the fact that such plates, after a certain period of time and of exposure to atmospheric agents, such as sun or ice, deteriorate and are subject to detachment, thus requiring the replacement thereof. Moreover, the possible detachment of the plates during travel can be dangerous for following cyclists or for the cyclist himself.

Finally, the application of plates is laborious and requires time with the consequent increase of the costs for manufacturing the wheel.

US 3894777 discloses a bicycle wheel comprising a number of spokes radially extending between a bicycle wheel rim and a hub, at least one flattened portion is formed respectively with each of said spokes by pressing, and onto both sides of each of said flattened portions reflecting materials are respectively applied for recognition and ornamentation purposes, Each of said flattened portion has substantially constant cross sections, i.e, the cross sections of said flattened portion - taken at different radial distance from the centre of the wheel - are substantially identical.

FR 2767749 discloses a bicycle wheel spoke having a flattened section of part of its length with a cross section which is smaller than the cross section of the body at one or both ends of the spoke. The width of the flattened section is substantially identical to that of the body at one or both ends of the spoke.

The object of the present invention is that of overcoming said drawbacks.

A first object of the invention is to manufacture a spoke which allows the visibility of the wheel to be increased without using additional elements.

Another object of the invention is that of manufacturing a spoke which allows the aerodynamics of the wheel to be increased and the noisiness to be decreased during rotation.

A further object of the invention is that of increasing the visibility of the wheel keeping the weight thereof at low values.

Such objects are met through a spoke for a bicycle wheel as recited in claim 1.

Advantageously, the zone of greater size, being provided close to the zone of attachment of the spoke to the rim, where the tangential speed during rotation is greater, allows the visibility effect of the spoke to be increased. The greater tangential speed emphasises, indeed, the visibility effect of the spoke and of the wheel.

According to a preferred embodiment, the elongated body of the spoke has an elliptical-shaped flattened profile orientated according to the plane of the wheel. In such a way, the aerodynamic coefficient of the spoke and of the wheel improves and the overall weight of the spoke is kept at low values.

Further characteristics and advantages of the invention shall become clearer from the description of some preferred embodiments, given with reference to the attached drawings, where:
- fig. 1 represents a longitudinal view of the spoke of the invention along the longitudinal axis;
- figures 1a-1c represent different sections of the spoke of fig. 1 respectively along the planes AA-AA, BB-BB and DD-DD;
- fig. 2 represents a side view of the spoke of fig. 1;
- fig. 3 represents a view of a first variant of the spoke of the invention of fig. 1;
- figures 3a-3c represent different sections of the spoke of fig. 3 respectively along the planes AA-AA, BB-BB and DD-DD;
- fig. 4 represents a side view of the spoke of fig. 3;
- fig. 5 represents a view of another variant of the spoke of fig. 1;
- figures 5a-5c represent different sections of the spoke of fig. 5 respectively along the planes AA-AA, BB-BB and DD-DD;
- fig. 6 represents a side view of the spoke of fig. 5;
- fig. 7 represents a view of another variant of the spoke of fig. 1;
- figures 7a-7c represent different sections of the spoke of fig. 7 respectively along the planes AA-AA, BB-BB and DD-DD;
- fig. 8 represents a side view of the spoke of fig. 7;
- fig. 9 represents a view of another variant of the spoke of the invention of fig. 1;
- figure 9a-9c represent different sections of the spoke of fig. 9 respectively along the planes AA-AA, BB-BB and DD-DD;
- fig. 10 represents a side view of the spoke of fig. 9;
- fig. 11 represents an axonometric view of the sealing element of the invention that can be used with the spoke of the invention;
- fig. 12 represents a section view along the plane A-A of the sealing element of fig. 11;
- fig. 13 represents an enlarged detail, in an axonometric view, of the spoke of the invention applied to a rim of a wheel;
- fig. 14 represents a plan view of a wheel equipped with the spokes of the invention of fig. 1.

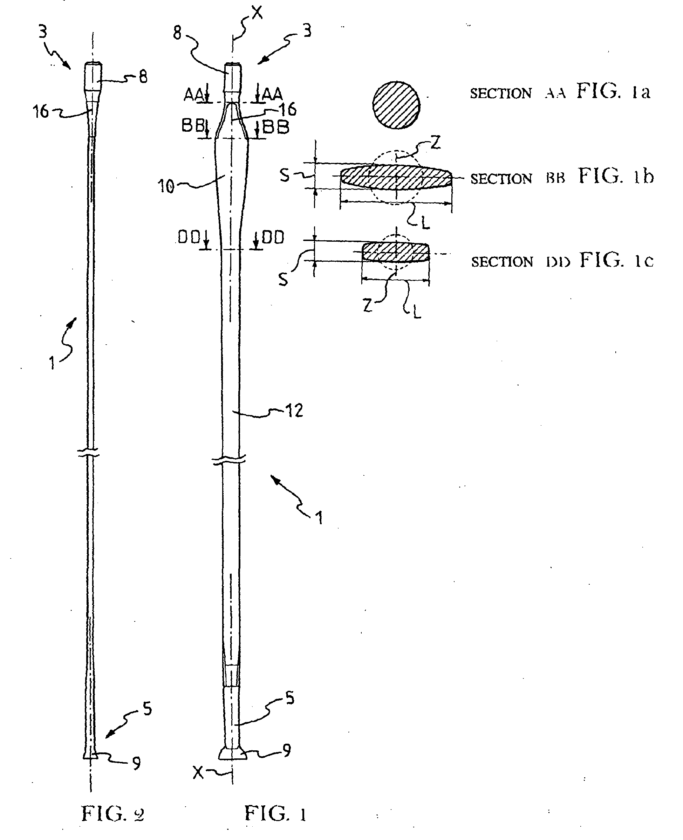

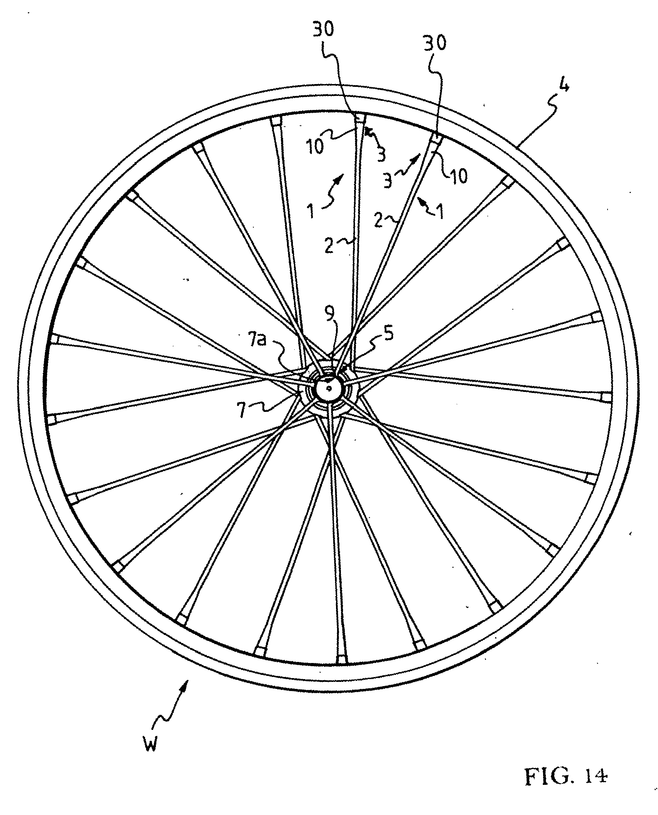

The spoke of the invention is represented in figures 1 and 2 and is wholly indicated with 1. In fig. 14 a bicycle wheel W is represented equipped with spokes 1 of such a type.

The spoke 1 has an elongated body 2 which extends along a longitudinal axis X-X. As can be seen more clearly in fig. 14, the elongated body 2 extends between a first end 3 for the attachment to the rim 4 of the wheel W and a second end 5 for the attachment to the hub 7 of the wheel W. The attachment of the spoke 1 to the rim 4 and to the hub 7 of the wheel W is carried out according to known techniques, better explained hereafter. For such a purpose, the first end 3 is cylindrical and provided with a threading 8, whereas the second end 5 has a suitably widened head 9 shaped to be received in a suitable seat 7a of the hub 7.

The spoke 1 of the invention has, close to the first end zone 3, a zone 10 of a size greater than the second end 5 of the spoke 1. For simplicity of explanation, we shall use for such a zone 10 the expression "high visibility zone" 10. Such a high visibility zone 10 extends along the longitudinal axis X-X for a length equal to about 10% of the total length of the spoke 1 and has in section, as can be seen in figs. 1b and 1c, an elliptical flattened profile which defines a width L and a thickness S along a transversal axis Z.

Throughout the present description and the subsequent claims, the term "profile", used with reference to the cross section of any portion of the spoke of the present invention, is used to indicate the shape defined by the outline of such a cross section. The expression "substantially the same profile", used with reference to the sections of the spoke of the present invention, is thus used to indicate that such sections have a substantially identical shape, certainly not necessarily also a substantially identical area. The expression "substantially the same", used with reference to the profiles of the sections of the spoke of the present invention, also embraces the possibility of not total identity of the profiles, for example due to joins, or bevels or tapers. For example, in the context of the present invention, a rectangular profile is to be considered substantially the same as an elliptical profile (or circular with a wide radium of curvature) with opposite faces that are squashed (not necessarily flat) and/or gradually joined.

Throughout the present description and the subsequent claims, the expression "flattened" is used to indicate a portion that has been squashed along the transversal axis Z so that the cross section of such a portion has one dimension (typically defining the thickness of the portion of spoke in question) that is smaller than the other dimension (typically defining the width of the portion of spoke in question). Therefore, the opposite faces of said portion of spoke do not necessarily have to be perfectly flat and parallel; i.e. it is also possible for such faces to have a substantially elliptical progression or a substantially circular progression with a wide radius of curvature.

With reference to the sections of figs. 1b and 1c, in the high visibility zone 10 of the spoke 1, the width L increases from section DD-DD to section BB-BB. The thickness S also slightly increases from section DD-DD to section BB-BB. Such sections have, in any case, substantially the same profile.

Between section BB-BB and circular section AA-AA, close to the cylindrical threaded end 8 of the first end zone 3, there is also a joining zone 16 in which from the zone with a flattened profile of the high visibility zone 10 one passes to the aforementioned circular zone of section AA-AA. In such a joining zone 16, the width L decreases whereas the thickness S increases, as can be seen more clearly in fig. 2.

The remaining part of the spoke 1, with respect to the high visibility zone 10, further to the end portion 5, has an intermediate portion 12, both of substantially flattened profile, but such portions could also have a substantially circular profile.

In figures 1a to 1c referring to the sections of the spoke 1 along the longitudinal axis X-X, with the broken line the circumference that defines the equivalent area of the represented area is shown. The equivalent area represents, for each section, the area of a hypothetical non-flattened cylindrical wire which has, in each section, the same area as the spoke 1 with a flattened profile.

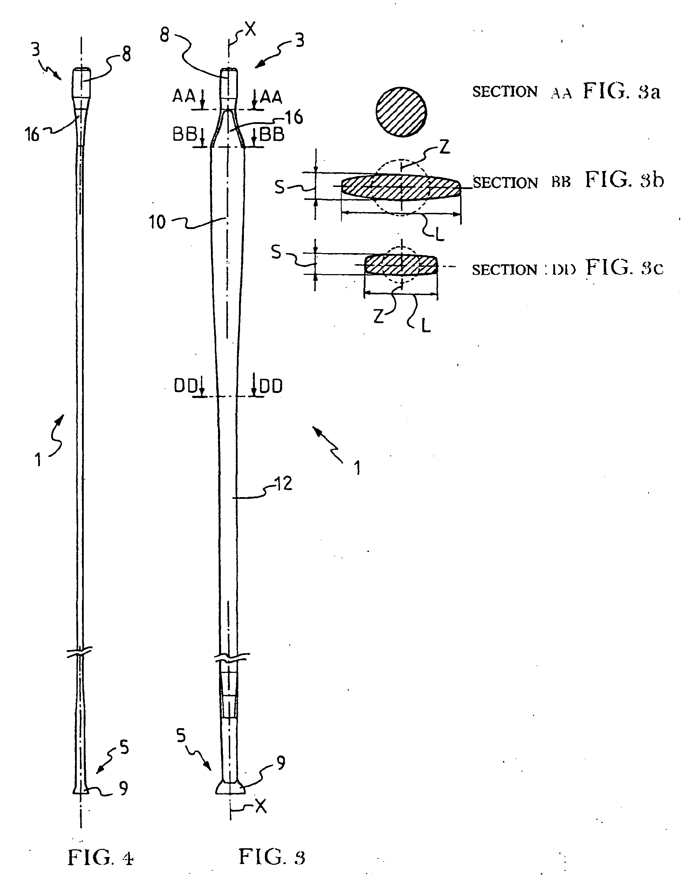

The variant of the spoke 1 represented in figures 3, 4 and from 3a to 3c, differs from the spoke 1 described above for the different extension of the high visibility zone 10 which represents about 30-40% of the total length of the spoke 1. Moreover, the remaining part of the spoke 1, with respect to the high visibility zone 10, as well as the end portion 5, has an intermediate portion 12, both of substantially flattened profile, but such portion could also have a substantially circular profile.

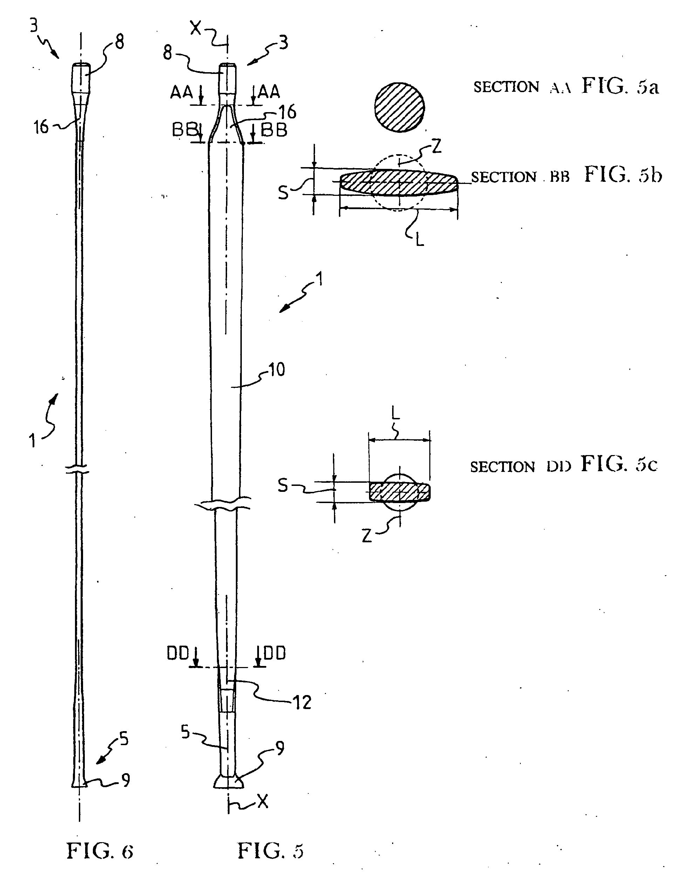

The variant of the spoke 1 represented in figures 5, 6 and from 5a to 5c, differs from the solutions previously described for the fact that the high visibility zone 10 extends up to close to the second end zone 5, i.e. up to the section DD-DD, for a length equal to about 80-90% of the total length of the spoke 1.

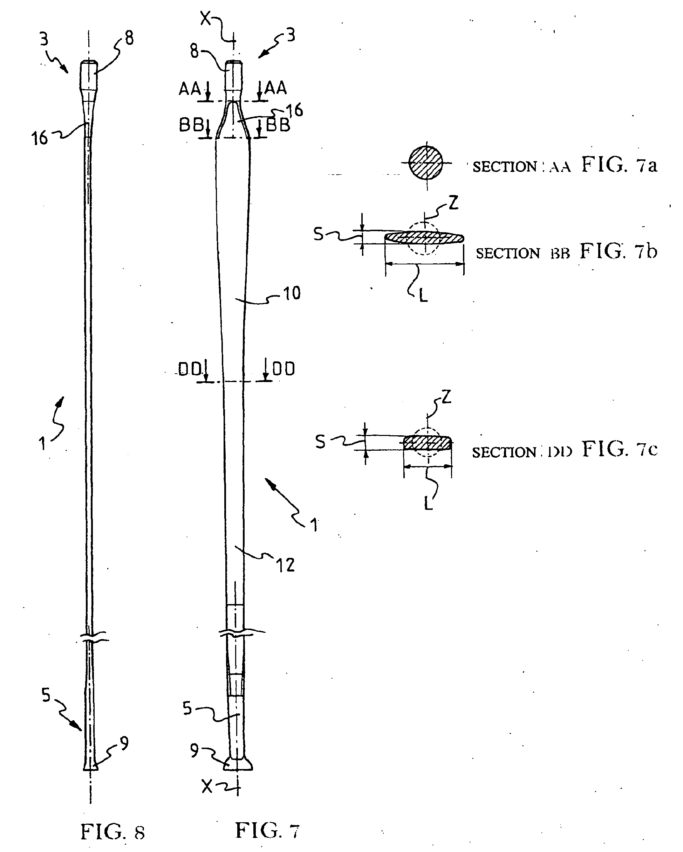

The variant of the spoke 1 represented in figures 7, 8 and from 7a to 7c, has the high visibility zone 10 which extends for a length equal to about 45-50% of the total length of the spoke 1.

Moreover, such a solution differs from the previous ones in that the thickness S of the spoke 1 in the various sections of the high visibility zone 10 starting from section DD-DD up to section BB-BB, continuously decreases. The continuous reduction of the thickness S in the high visibility zone 10 contributes to decreasing the equivalent areas of the spoke in the various sections and thus to decreasing its overall weight. Moreover, such a reduction in thickness allows the coefficient of aerodynamic penetration of the spoke 1 to be increased which, in its position mounted in the wheel, is the part of the spoke subjected to the greatest tangential speed and thus to the greatest friction with air.

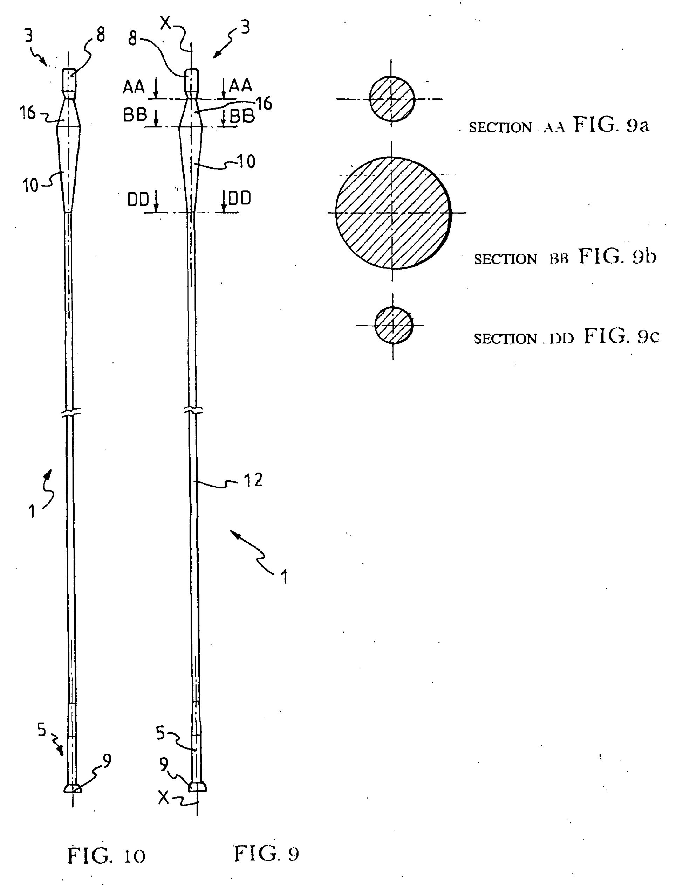

The variant of the spoke 1 represented in figures 9, 10 and from 9a to 9c, has the high visibility zone 10 which extends for a length equal to about 20-25% of the total length of the spoke 1.

Such a solution differs from the previous ones in that the high visibility zone 10 has, in each section thereof, a circular profile. The remaining part of the spoke 1, with respect to the high visibility zone 10, further to the end portion 5, has an intermediate portion 12, both with a circular profile, but such portions could also have a flattened profile.

A first method for manufacturing the spokes described and represented in figures from 1 to 8 is described hereafter with reference to figures 1, 2 and from 1a to 1c and can be extended to the remaining solutions.

The first step of the method comprises the cutting of a filament of predetermined length from a wire of metallic material, preferably but not necessarily aluminium, of circular section. The area of the circular section of the wire is chosen equal to the equivalent area of the section of the widened shaped head 9 of the second end 5. The wire is in an annealed state which, as known, gives the wire physical characteristics of deformability particularly suitable for the subsequent processing.

Then follows a step of shaping the filament obtained. The shaping of the filament is obtained through plastic deformation, cold or hot, and preferably through hammering.

Such shaping allows a profile with variable geometry to be obtained, preferably with a circular section, between the end zone 3 and the second end zone 5, in which each section has an area equal to the desired equivalent area for the end spoke.

Then there is an optional intermediate annealing heat treatment to promote the reduction in hardness of the material and to increase its deformability.

One then proceeds with the squashing of the filament in the various sections to obtain the desired end elliptical profiles. The squashing is carried out by cold or hot plastic deformation, through mould and counter mould, or else by lamination, i.e. with the passage of the filament between rollers with suitably shaped surfaces.

Then a further optional intermediate annealing heat treatment is carried out to promote the reduction in hardness of the material and to increase its deformability.

Then there is the step of shaping the widened head 9 of the second end 5 through squashing by moulding through a mould and counter mould having shapes suitable for giving the head 9 the desired shape. It should be noted that such a step, alternatively, can be carried out at the same time as the previous squashing step of the filament.

One then proceeds to the calibration of the length of the spoke, commonly known as butting, which consists of the trimming of the second end 5 to calibrate the total length of the spoke according to the desired final length of the spoke 1.

The filament is then subjected to a drawing temper heat treatment to increase its mechanical characteristics, for example a tempering and drawing process should the metallic material of which the spoke consists be steel, or a tempering and ageing process should aluminium be used.

Then there is the threading of the first end 3 for attachment to the rim 4 which can be carried out by rolling or by a shaving-removal operation. In the case of rolling, the profile of the thread is obtained by plastic deformation of the first end 3 by acting upon a circular section of the filament, obtained during the previous shaping step, having a diameter smaller than the outer diameter of the desired threading and equal to about the core diameter. In the case of shaving-removal, the profile of the thread is obtained by removal of material by acting upon a circular section of the filament, obtained during the previous shaping step, having the same diameter as the outer diameter of the threading to be obtained.

Finally, the spoke obtained from the previous processing is subjected to surface protection treatments, such as anodisation or painting, which give the spoke the desired properties of surface protection and the desired aesthetic characteristics.

A second method for manufacturing the spokes described and represented in figures from 1 to 8 is described hereafter with reference to figures 1, 2 and from 1a to 1c and can be extended to the remaining solutions.

The first step comprises the cutting of a filament of predetermined length from a wire of metallic material, preferably but not necessarily aluminium, of circular section. The wire is in an annealed state which, as known, gives the wire physical characteristics of deformability particularly suitable for the subsequent processing.

The area of the circular section of the wire is chosen equal to the equivalent area of the section of the first end 3 before threading, defined as pre-processing area. Such a pre-processing area shall consist of a circumference of a diameter smaller than the outer diameter of the desired threading in the case in which a subsequent threading by rolling is foreseen, or else it shall consist of a circumference of the same diameter as the outer diameter of the desired threading in the case in which a subsequent threading by shaving-removal is foreseen.

Then follows a step of shaping the filament obtained. The shaping of the filament is obtained through plastic deformation, cold or hot, and preferably through hammering. Such shaping allows a profile with variable geometry to be obtained, preferably with a circular section, between the first end zone 3 and the second end zone 5, in which each section has an area equal to the desired equivalent area for the end spoke 1.

Then there is an optional intermediate annealing heat treatment to promote the reduction in hardness of the material and to increase its deformability.

One then proceeds to the squashing of the filament in the various sections to obtain the desired end elliptical profiles. The squashing is carried out by cold or hot plastic deformation and can be carried out by moulding, through mould and counter mould, or else by lamination, i.e. with the passage of the filament between rollers with suitably shaped surfaces.

Then a further optional intermediate annealing heat treatment is carried out to promote the reduction in hardness of the material and to increase its deformability.

Then there is the step of shaping the widened head 9 of the second end 5 through upsetting, during which the section of the head is progressively increased through axial movement of the material until the desired section is obtained.

One then proceeds to the calibration of the length of the spoke, commonly known as butting, which consists of the trimming of the second end 5 to calibrate the total length of the spoke according to the desired final length of the spoke 1.

Then the filament is subjected to a drawing temper heat treatment to increase the mechanical characteristics, for example a tempering and drawing process should the metallic material of which the spoke consists be steel, or a tempering and ageing process should aluminium be used.

Then there is the threading of the first end 3 for attachment to the rim 4 which can be carried out by rolling or by shaving-removal according to the area of the preselected starting wire, in accordance with that which has been stated previously.

Finally, the spoke obtained from the previous processing is subjected to surface protection treatments, such as anodisation or painting, which give the spoke the desired properties of surface protection and the desired aesthetic characteristics.

In general, and according to that which has been described for the two methods, if the section of the starting wire is chosen equal to the equivalent section of the second end zone for attachment to the hub, the shaping of the head is carried out by moulding, whereas if the section of the starting wire is smaller than the section of the equivalent section of the second end zone for attachment to the hub, the shaping of the head is carried out by upsetting.

The described methods allow a spoke to be obtained that has sections with different areas, as well as different shapes, along its length. Such methods allow a spoke to be obtained with a small amount of material in its central zone, where the traction stresses are not amplified by local effects related to the attachment to the rim or to the hub.

As far as the manufacturing of the spoke shown and described in figures 9, 10 and from 9a to 9f is concerned, it can be manufactured according to one of the previous methods wherein the squashing step of the various sections of the filament is omitted due to the fact that it must have a substantially circular profile along its entire length.

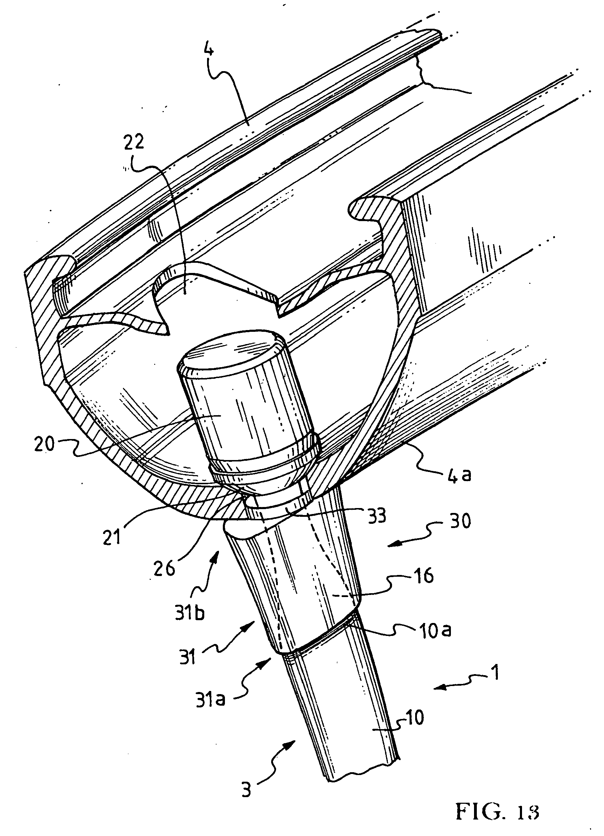

The spoke 1 described above is connected to the rim 4, through its first threaded end zone 3. The attachment of the spoke 1 to the rim 4 of the wheel W must be carried out keeping the spoke 1 itself orientated in such a way that the width L of the high visibility zone 10 lies on a plane perpendicular to the axis of the wheel W, or plane of the wheel, in such a way as to be visible to an observer placed at the side of the bicycle. In the embodiment represented here in figure 13, the locking of the first end zone 3 to the rim 4 is carried out by using a lock nut 20, arranged resting upon an intermediate plate 21, and positioned inside the rim 4 through its insertion by the upper hole 22.

It is clear, however, that in different embodiments the locking of the spoke 1 could be carried out in a different way, for example through the use of nipples.

As can be seen in fig. 13, when the spoke 1 is fixed to the rim 4, a sealing element 30 is positioned which wraps around the radial extreme part of the spoke 1, in particular the joining zone 16.

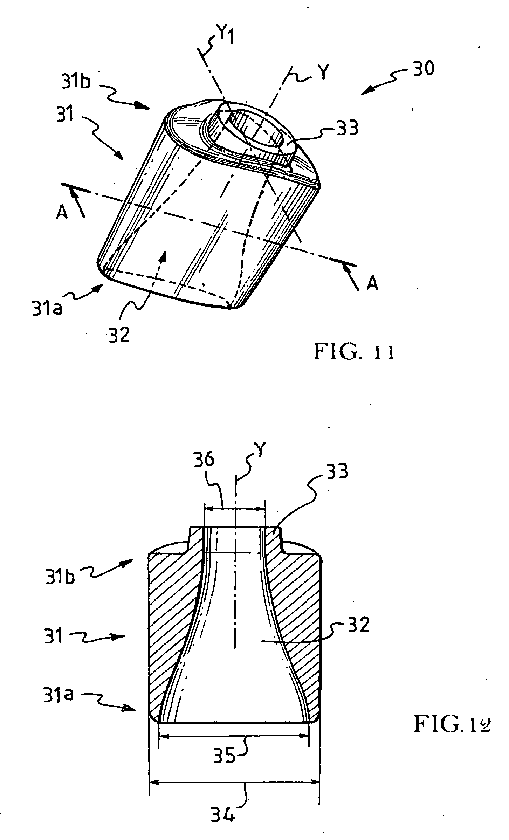

The sealing element 30, as can be seen in particular in figures 11 and 12, has a main body 31 which extends along a main axis Y from a lower end 31a to an upper end 31b and provided with a through hole 32.

The through hole 32 is peripherally closed and is defined by a surface with a shape matching the outer surface of the joining zone 16 of the spoke 1. Such a hole 32 has a decreasing width starting from a maximum value 35 at the lower end 31a of the main body 31 up to a minimum value 36 at the upper end 31b of the main body 31. The maximum value 35 substantially corresponds to the maximum width of the maximum visibility zone 10 (section BB-BB) of the spoke 1, whereas the minimum value 36 corresponds to the diameter of the cylindrical zone (section AA-AA) of the spoke 1.

The main body 31 is substantially prism-shaped and has, along a transversal axis Y1, an increase in size passing from the lower end 31a to the upper end 31b. The outer dimension 34 of the sealing element 30 along the main axis Y, as can be seen in fig. 12, is kept substantially constant and substantially equal to, or slightly greater than, the maximum width of the spoke 1. In such a way, when the sealing element 30 is mounted on the wheel W, as can be seen in fig. 13, it defines an extension of the high visibility zone 10 of the spoke 1 up to the inner peripheral surface 4a of the rim 4. This allows the visibility effect of the spoke 1 and of the wheel W to be increased. Moreover, the provision of the sealing element 30 covering the joining zone 16 of the spoke 1, allows the turbulence with air during rotation to be decreased, with beneficial effects on the aerodynamics and on the noisiness of the spoke 1 and of the wheel W.

At the upper end 31b of the main body 31, a collar 33 is also formed, consisting of an annular edge with a substantially circular section which is received with mechanical interference inside the hole 26 crossing the first end zone 3 of the spoke 1. Such a collar 33 allows the hermetic sealing of the hole 26 to be effected, in order to avoid the entry of dirt inside the rim 4.

For such a purpose the sealing element 30 is preferably made of plastic material with resilient properties which ensures a seal as hermetic as possible of the hole 26. Finally, in the attachment step of the spoke 1 to the wheel W, the sealing element 30 makes easier the screwing operations of the nut 20, keeping the spoke 1 firmly in position inside the hole 26.

## Claims

1. Spore (1) for a bicycle wheel (W) comprising an elongated body (2) which extends along an axis (X-X), between a first end (3) adapted to be fixed to the rim (4) of the wheel (W) and a second end (5) .adapted to be fixed to the hub (7) of the wheel (W), said spoke (1) having, close to said first end (3), a zone (10) of a size greater, than the size of a zone close to said second end (5), **characterised in that** said zone of greater size (10) increases progressively in size as it approaches said first end (3).

2. Spoke (1) according to claim 1, **characterised in that** said zone of greater size (10) extends along said axis (X-X) for about one-tenth of the length of the spoke (1).

3. Spoke (1) according to claim 1, **characterised in that** said zone of greater size (10) extends along said axis (X-X) for about one-fifth of the length of the spoke (1).

4. Spoke (1) according to claim 1, **characterised in that** said zone of greater size (10) extends along said axis (X-X) for about one-third of the length of the spoke (1).

5. Spoke (1) according to claim 1, **characterised in that** said zone of greater size (10) extends along said axis (X-X) for about half the length of the spoke (1).

6. Spoke (1) according to claim 1, **characterised in that** said zone of greater size (10) extends along said axis (X-X) for almost the entire length of the spoke (1).

7. Spoke (1) according to one of the previous claims, **characterised in that** said first end (3) for the attachment of the spoke (1) to the rim (4) of the wheel (W) has a section, perpendicular to said axis (X-X), that is substantially circular and of a size smaller than said zone of greater size (10).

8. Spoke (1) according to claim 1, **characterised in that** it has, between said zone of greater size (10) and said first end (3), a joining zone (16).

9. Spoke (1) according to claim 8, **characterised in that** said joining zone (16) decreases progressively in size between said zone of greater size (10) and said first end (3).

10. Spoke (1) according to one of the previous claims, **characterised in that** said zone of greater size (10) has, on a plane perpendicular to said axis (X-X), a cross section with a circular profile.

11. Spoke (1) according to one of claims from 1 to 9, **characterised in that** said zone of greater size (10) has, on a plane perpendicular to said axis (X-X), a section with a flattened profile defining a width (L) and a thickness (S), the size of said width (L) being greater than the size of said thickness (S).

12. Spoke (1) according to claim 11, **characterised in that** said flattened profile is elliptical-shaped.

13. Spoke (1) according to claims 10 or 11, **characterised in that** it has, in the remaining part with respect to said zone of greater size (10), on a plane perpendicular to said axis (X-X), a cross section with a circular profile.

14. Spoke (1) according to claims 10 or 11, **characterised in that** it has, in the remaining part with respect to said zone of greater size (10), on a plane perpendicular to said axis (X-X), a cross section with a flattened profile.

15. Spoke (1) according to claims 11 or 14, **characterised in that** said width (L) of said flattened profile is intended to life on a plane substantially perpendicular to the axis of the wheel (W).

16. Spoke (1) according to claim 11, **characterised in that** said thickness (S) of said zone of greater size (10) decreases progressively along said axis (X-X) in the direction of said first end (3).

17. Spoke (1) according to claim 11, **characterised in that** said thickness (S) of said zone of greater size (10) increases progressively along said axis (X-X) in the direction of said first end (3).

18. Spoke (1) according to claim 11, **characterised in that** said thickness (S) of said zone of greater size (10) is constant along said axis (X-X).

19. Spoke (1) according to claim 1, **characterised in that** said first end (3) is threaded.

20. Spoke (1) according to claim 1, **characterised in that** said second end (5) has a widened head (9) adapted to be received in a corresponding seat (7a) of said hub (7).

21. Spoke (1) according to claim 20, **characterised in that** said widened head (9) has a flattened profile.

22. Combination of a spoke (1) according to claim 1 and a sealing element (30) that comprises a main body (31) provided with a through hole (32) adapted to deceive part of said elongated body (2) of said spoke (1).

23. Combination according to claim 22, **characterised in that** said through hole (32) is peripherally closed.

24. Combination according to claim 22, **characterised in that** said through hole (32) is defined by a surface with a shape matching the outer surface of said elongated body (2).

25. Combination according to claim 22, **characterised in that** the sealing element (30) comprises a cellar (33) formed at an end (31b) of said main body (31) and adapted to be inserted in the hole (26) for the attachment of said spoke (1) to said rim (4).

26. Combination according to claim 22, **characterised in that** the sealing element (30) is made of resilient material.

27. Bicycle wheel (W) **characterised in that** it comprises a plurality of spokes (1) according to any one of claims from 1 to 21.

28. Wheel (W) according to claim 27, **characterised in that** it also comprises a sealing element (30) according to claim 22 arranged between said zone of greater size (10) of said spoke (1) and the inner peripheral surface (4a) of said rim-(4) of said wheel (W).

29. Wheel (W) according to claim 27, **characterised in that** it comprises attachment and/or adjustment means (20) of said spoke (1) to said rim (4).

30. Wheel (W) according to claim 29, **characterised in that** said attachment means consist of a nut (20).

31. Wheel according to claim 29, **characterised in that** said attachment means (20) consist of a nipple.

32. Method for manufacturing a spoke (1) for a bicycle wheel (W), said spoke comprising an elongated body (2) which extends along an axis (X-X), between a first end (3) adapted to be fixed to the rim (4) of the wheel (W) and a second end (5) adapted to be fixed to the hub (7) of the wheel (W), **characterised in that** it comprises the following steps:
- cutting a filament of circular section of predetermined length from a wire of metallic material in an annealed state;
- shaping the filament to obtain a profile with variable geometry between the first end zone (3) and the second end zone (5), said filament having, close to said first end zone (3), a zone (10) of a size greater than the size of said second end zone (5), wherein said zone (10) of greater size increases progressively in size as it approaches said first end (3);
- calibrating the length of the spoke (1);
- carrying out a drawling temper heat treatment to increase the mechanical characteristics of the spoke (1);
- threading said first end (3) for the attachment to the rim (4) of said spoke (1).

33. Method according to claim 32, **characterised in that** said step of shaping the filament is carried out by hot or cold plastic deformation.

34. Method according to claim 33, **characterised in that** said cold plastic deformation is carried out by hammering.

35. Method according to claim 32, **characterised in that** it comprises a step of squashing said filament after said shaping step of the filament.

36. Method according to claim 35, **characterised in that** said squashing step is carried out by moulding.

37. Method according to claim 35, **characterised in that** said squashing step is carried out by lamination.

38. Method according to claim 32, **characterised in that** it comprises a step of shaping said second end (5) to obtain the desired attachment shape to the hub (7).

39. Method according to claim 32, **characterised in that** the area of the section of said wire is equal to the desired area of the cross section of said second end (5) for attachment to the hub (7).

40. Method according to claim 32, **characterised in that** the area of the section of said wire is equal to the area of the cross section of said first end (3) for attachment to the rim (4).

41. Method according to claim 38 and 39, **characterised in that** said shaping step of said second end (5) is carried out by moulding.

42. Method according to claim 38 and 40, **characterised in that** said shaping step of said second end (5) is carried out by upsetting.

43. Method according to claim 32, **characterised in that** said threading takes is carried out by rolling.

44. Method according to claim 32, **characterised in that** said threading is carried out by shaving-removal.

45. Method according to claim 32, **characterised in that** it comprises an end surface protection treatment.

46. Method according to claim 45, **characterised in that** said end surface protection treatment is an anodisation.

47. Method according to claim 45, **characterised in that** said end surface protection treatment is a painting.

48. Method according to claim 32, **characterised in that** it comprises further intermediate annealing heat treatment steps.

## Patentansprüche

1. Speiche (1) für ein Fahrradrad (W), enthaltend einen länglichen Körper (2), der sich entlang einer Achse (X-X) zwischen einem ersten Ende (3), das dazu eingerichtet ist, an der Felge (4) des Rades (W) befestigt zu werden, und einem zweiten Ende (5) erstreckt, das dazu eingerichtet ist, an der Nabe (7) des Rades (W) befestigt zu werden, wobei die Speiche (1) dicht am ersten Ende (3) über eine Zone (10) einer Größe verfügt, die größer ist als die Größe einer Zone dicht am zweiten Ende (5), **dadurch gekennzeichnet, dass** die Zone der größeren Größe (10) mit Annäherung an das erste Ende (3) progressiv zunimmt.

2. Speiche (1) nach Anspruch 1, **dadurch gekennzeichnet, dass** sich die Zone größerer Größe (10) entlang der Achse (X-X) über etwa ein Zehntel der Länge der Speiche (1) erstreckt.

3. Speiche (1) nach Anspruch 1, **dadurch gekennzeichnet, dass** sich die Zone größerer Größe (10) entlang der Achse (X-X) über etwa ein Fünftel der Länge der Speiche (1) erstreckt.

4. Speiche (1) nach Anspruch 1, **dadurch gekennzeichnet, dass** sich die Zone größerer Größe (10) entlang der Achse (X-X) über etwa ein Drittel der Länge der Speiche (1) erstreckt.

5. Speiche (1) nach Anspruch 1, **dadurch gekennzeichnet, dass** sich die Zone größerer Größe (10) entlang der Achse (X-X) über etwa die Hälfte der Länge der Speiche (1) erstreckt.

6. Speiche (1) nach Anspruch 1, **dadurch gekennzeichnet, dass** sich die Zone größerer Größe (10) entlang der Achse (X-X) über beinahe die gesamte Länge der Speiche (1) erstreckt.

7. Speiche (1) nach einem der vorhergehenden Ansprüche, **dadurch gekennzeichnet, dass** das erste Ende (3) für die Anbringung der Speiche (1) an der Felge (4) des Rades (W) einen Abschnitt senkrecht zur Achse (X-X) aufweist, der im wesentlichen kreisförmig ist und eine Größe hat, die kleiner ist als die Zone der größeren Größe (10).

8. Speiche (1) nach Anspruch 1, **dadurch gekennzeichnet, dass** sie zwischen der Zone der größeren Größe (10) und dem ersten Ende (3) über eine Verbindungszone (16) verfügt.

9. Speiche (1) nach Anspruch 8, **dadurch gekennzeichnet, dass** die Verbindungszone (16) zwischen der Zone der größeren Größe (10) und dem ersten Ende (3) progressiv in der Größe abnimmt.

10. Speiche (1) nach einem der vorhergehenden Ansprüche, **dadurch gekennzeichnet, dass** die Zone größerer Größe (10) in einer Ebene senkrecht zur Achse (X-X) einen Querschnitt mit einem kreisförmigen Profil hat.

11. Speiche (1) nach einem der Ansprüche 1 bis 9, **dadurch gekennzeichnet, dass** die Zone größerer Größe (10) in einer Ebene senkrecht zur Achse (X-X) einen Querschnitt mit einem flachen Profil hat, das eine Breite (L) und eine Dicke (S) definiert, wobei die Größe der Breite (L) größer ist als die Größe der Dicke (S).

12. Speiche (1) nach Anspruch 11, **dadurch gekennzeichnet, dass** das flache Profil elliptisch ist.

13. Speiche (1) nach Anspruch 10 oder 11, **dadurch gekennzeichnet, dass** sie im übrigen Teil im Bezug auf die Zone größerer Größe (10) in einer Ebene senkrecht zur Achse (X-X) einen Querschnitt mit einem kreisförmigen Profil hat.

14. Speiche (1) nach Anspruch 10 oder 11, **dadurch gekennzeichnet, dass** sie im übrigen Teil im Bezug auf die Zone größerer Größe (10) in einer Ebene senkrecht zur Achse (X-X) einen Querschnitt mit einem flachen Profil hat.

15. Speiche (1) nach Anspruch 11 oder 14, **dadurch gekennzeichnet, dass** die Breite (L) des flachen Profils in einer Ebene liegen soll, die im wesentlichen senkrecht zur Achse des Rades (W) verläuft.

16. Speiche (1) nach Anspruch 11, **dadurch gekennzeichnet, dass** die Dicke (S) der Zone größerer Größe (10) entlang der Achse (X-X) in der Richtung des ersten Endes (3) progressiv abnimmt.

17. Speiche (1) nach Anspruch 11, **dadurch gekennzeichnet, dass** die Dicke (S) der Zone größerer Größe (10) entlang der Achse (X-X) in Richtung des ersten Endes (3) progressiv zunimmt.

18. Speiche (1) nach Anspruch 11, **dadurch gekennzeichnet, dass** die Dicke (S) der Zone größerer Größe (10) entlang der Achse (X-X) konstant ist.

19. Speiche (1) nach Anspruch 1, **dadurch gekennzeichnet, dass** das erste Ende (3) mit einem Gewinde versehen ist.

20. Speiche (1) nach Anspruch 1, **dadurch gekennzeichnet, dass** das zweite Ende (5) einen geweiteten Kopf (9) beinhaltet, der dazu eingerichtet ist, in einem entsprechenden Sitz (7a) der Nabe (7) aufgenommen zu werden.

21. Speiche (1) nach Anspruch 20, **dadurch gekennzeichnet, dass** der geweitete Kopf (9) ein flaches Profil hat.

22. Kombination aus einer Speiche (1) nach Anspruch 1 und einem Dichtungselement (30), das einen Hauptkörper (31) enthält, der mit einem Durchgangsloch (32) versehen ist, das dazu eingerichtet ist, einen Teil des länglichen Körpers (2) der Speiche (1) aufzunehmen.

23. Kombination nach Anspruch 22, **dadurch gekennzeichnet, dass** das Durchgangsloch (32) in Umfangsrichtung geschlossen ist.

24. Kombination nach Anspruch 22, **dadurch gekennzeichnet, dass** das Durchgangsloch (32) durch eine Oberfläche mit einer Form definiert ist, die zur Außenoberfläche des länglichen Körpers (2) passt.

25. Kombination nach Anspruch 22, **dadurch gekennzeichnet, dass** das Dichtungselement (30) einen Kragen (33) enthält, der an einem Ende (31b) des Hauptkörpers (31) ausgebildet und dazu eingerichtet ist, in das Loch (26) für die Anbringung der Speiche (1) an der Felge (4) eingefügt zu werden.

26. Kombination nach Anspruch 22, **dadurch gekennzeichnet, dass** das Dichtungselement (30) aus einem elastischen Material besteht.

27. Fahrradrad (W), **dadurch gekennzeichnet, dass** es eine Vielzahl von Speichen (1) gemäß einem der Ansprüche 1 bis 21 enthält.

28. Rad (W) nach Anspruch 27, **dadurch gekennzeichnet, dass** es zudem ein Dichtungselement (30) nach Anspruch 22 enthält, das zwischen der Zone der größeren Größe (10) der Speiche (1) und der Innenumfangsfläche (4a) der Felge (4) des Rades (W) angeordnet ist.

29. Rad (W) nach Anspruch 27, **dadurch gekennzeichnet, dass** es eine Anbringungs- und/oder Einstelleinrichtung (20) der Speiche (1) an der Felge (4) enthält.

30. Rad (W) nach Anspruch 29, **dadurch gekennzeichnet, dass** die Anbringungseinrichtung aus einer Mutter (20) besteht.

31. Rad (W) nach Anspruch 29, **dadurch gekennzeichnet, dass** die Anbringungseinrichtung (20) aus einem Nippel besteht.

32. Verfahren zum Herstellen einer Speiche (1) für ein Fahrradrad (W), wobei die Speiche einen länglichen Körper (2) enthält, der sich entlang einer Achse (X-X) zwischen einem ersten Ende (3), das dazu eingerichtet ist, an der Felge (4) des Rades (W) befestigt zu werden, und einem zweiten Ende (5) erstreckt, das dazu eingerichtet ist, an der Nabe (7) des Rades (W) befestigt zu werden, **dadurch gekennzeichnet, dass** es folgende Schritte umfasst:
- Schneiden eines Strangs eines kreisförmigen Querschnittes einer vorbestimmten Länge von einem Draht eines Metallmaterials in einem angelassenen Zustand;
- Formen des Strangs, um ein Profil mit einer sich verändernden Geometrie zwischen der ersten Endzone (3) und der zweiten Endzone (5) zu erhalten, wobei der Strang dicht an der ersten Endzone (3) eine Zone (10) einer Größe enthält, die größer als die Größe der zweiten Endzone (5) ist und die Zone (10) der größeren Größe mit Annäherung an das erste Ende (3) in der Größe progressiv zunimmt;
- Kalibrieren der Länge der Speiche (1);
- Ausführen einer Zugtemperwärmebehandlung, um die mechanischen Eigenschaften der Speiche (1) zu verbessern; und
Versehen des ersten Endes (3) mit einem Gewinde für die Anbringung der Speiche (1) an der Felge (4).

33. Verfahren nach Anspruch 32, **dadurch gekennzeichnet, dass** der Schritt des Formen des Strangs durch plastische Heiß- oder Kaltverformung ausgeführt wird.

34. Verfahren nach Anspruch 33, **dadurch gekennzeichnet, dass** die plastische Kaltverformung durch Hämmern ausgeführt wird.

35. Verfahren nach Anspruch 32, **dadurch gekennzeichnet, dass** es den Schritt des Quetschens des Strangs nach dem Schritt des Formens des Strangs umfasst.

36. Verfahren nach Anspruch 35, **dadurch gekennzeichnet, dass** der Schritt des Quetschens durch Formpressen ausgeführt wird.

37. Verfahren nach Anspruch 35, **dadurch gekennzeichnet, dass** der Schritt des Quetschens durch Laminieren ausgeführt wird.

38. Verfahren nach Anspruch 32, **dadurch gekennzeichnet, dass** es einen Schritt des Formens des zweiten Endes (5) umfasst, um die gewünschte Anbringungsform an der Nabe (7) zu erhalten.

39. Verfahren nach Anspruch 32, **dadurch gekennzeichnet, dass** die Querschnittsfläche des Drahtes gleich der gewünschten Querschnittsfläche des zweiten Endes (5) für die Anbringung an der Felge (7) ist.

40. Verfahren nach Anspruch 32, **dadurch gekennzeichnet, dass** die Querschnittsfläche des Drahtes gleich der Querschnittsfläche des ersten Endes (3) für die Anbringung an der Felge (4) ist.

41. Verfahren nach Anspruch 38 und 39, **dadurch gekennzeichnet, dass** der Schritt des Formens des zweiten Endes (5) durch Formpressen ausgeführt wird.

42. Verfahren nach Anspruch 38 und 40, **dadurch gekennzeichnet, dass** der Schritt des Formens des zweiten Endes (5) durch Stauchen ausgeführt wird.

43. Verfahren nach Anspruch 32, **dadurch gekennzeichnet, dass** das Ausbilden des Gewindes durch Walzen ausgeführt wird.

44. Verfahren nach Anspruch 32, **dadurch gekennzeichnet, dass** das Ausbilden des Gewindes durch Spanabheben ausgeführt wird.

45. Verfahren nach Anspruch 32, **dadurch gekennzeichnet, dass** es eine Endflächenschutzbehandlung umfasst.

46. Verfahren nach Anspruch 45, **dadurch gekennzeichnet, dass** die Endflächenschutzbehandlung durch Anodisieren erfolgt.

47. Verfahren nach Anspruch 45, **dadurch gekennzeichnet, dass** die Endflächenschutzbehandlung durch Farbauftrag erfolgt.

48. Verfahren nach Anspruch 32, **dadurch gekennzeichnet, dass** es weiterhin Anlasswärmebehandlungs-Zwischenschritte enthält.

## Revendications

1. Rayon (1) pour une roue de bicyclette (W) comprenant un corps allongé (2) qui s'étend le long d'un axe (X-X), entre une première extrémité (3) apte à être fixée à la jante (4) de la roue (W) et une deuxième extrémité (5) apte à être fixée au moyeu (7) de la roue (W), ledit rayon (1) ayant, à proximité de ladite première extrémité (3), une zone (10) d'une taille supérieure à la taille d'une zone proche de ladite deuxième extrémité (5), **caractérisé en ce que** ladite zone de taille supérieure (10) augmente progressivement en taille en s'approchant de ladite extrémité (3).

2. Rayon (1) selon la revendication 1, **caractérisé en ce que** ladite zone de taille supérieure (10) s'étend le long dudit axe (X-X) sur environ un dixième de la longueur du rayon (1).

3. Rayon (1) selon la revendication 1, **caractérisé en ce que** ladite zone de taille supérieure (10) s'étend le long dudit axe (X-X) sur environ un cinquième de la longueur du rayon (1).

4. Rayon (1) selon la revendication 1, **caractérisé en ce que** ladite zone de taille supérieure (10) s'étend le long dudit axe (X-X) sur environ un tiers de la longueur du rayon (1).

5. Rayon (1) selon la revendication 1, **caractérisé en ce que** ladite zone de taille supérieure (10) s'étend le long dudit axe (X-X) sur environ la moitié de la longueur du rayon (1).

6. Rayon (1) selon la revendication 1, **caractérisé en ce que** ladite zone de taille supérieure (10) s'étend le long dudit axe (X-X) sur pratiquement toute la longueur du rayon (1).

7. Rayon (1) selon l'une des revendications précédentes, **caractérisé en ce que** ladite première extrémité (3) pour l'attachement du rayon (1) à la jante (4) de la roue (W) a une coupe, perpendiculaire au dit axe (X-X), qui est sensiblement circulaire et de taille inférieure à celle de ladite zone de taille supérieure (10).

8. Rayon (1) selon la revendication 1, **caractérisé en ce qu'**il comporte, entre ladite zone de taille supérieure (10) et ladite première extrémité (3), une zone de jonction (16).

9. Rayon (1) selon la revendication 8, **caractérisé en ce que** ladite zone de jonction (16) décroît progressivement en taille entre ladite zone de taille supérieure (10) et ladite première extrémité (3).

10. Rayon (1) selon l'une quelconque des revendications précédentes, **caractérisé en ce que** ladite zone de taille supérieure (10) comporte, sur un plan perpendiculaire au dit axe (X-X), une coupe transversale de profil circulaire.

11. Rayon (1) selon l'une quelconque des revendications 1 à 9, **caractérisé en ce que** ladite zone de taille supérieure (10) comporte, sur un plan perpendiculaire au dit axe (X-X), une coupe de profil aplati définissant une largeur (L) et une épaisseur (S), la taille de ladite largeur (L) étant supérieure à la taille de ladite épaisseur (S).

12. Rayon (1) selon la revendication 11, **caractérisé en ce que** ledit profil aplati est de forme elliptique.

13. Rayon (1) selon la revendication 10 ou 11, **caractérisé en ce qu'**il comporte, dans la partie restante par rapport à ladite zone de taille supérieure (10), sur un plan perpendiculaire au dit axe (X-X), une coupe transversale de profil circulaire.

14. Rayon (1) selon la revendication 10 ou 11, **caractérisé en ce qu'**il comporte, dans la partie restante par rapport à ladite zone de taille supérieure (10), sur un plan perpendiculaire au dit axe (X-X), une coupe transversale de profil aplati.

15. Rayon (1) selon la revendication 11 ou 14, **caractérisé en ce que** ladite largeur (L) dudit profil aplati est destiné à se trouver dans un plan sensiblement perpendiculaire à l'axe de la roue (W).

16. Rayon (1) selon la revendication 11, **caractérisé en ce que** ladite épaisseur (S) de ladite zone de taille supérieure (10) décroît progressivement le long dudit axe (X-X) dans la direction de ladite première extrémité (3).

17. Rayon (1) selon la revendication 11, **caractérisé en ce que** ladite épaisseur (S) de ladite zone de taille supérieure (10) augmente progressivement le long dudit axe (X-X) dans la direction de ladite première extrémité (3).

18. Rayon (1) selon la revendication 11, **caractérisé en ce que** ladite épaisseur (S) de ladite zone de taille supérieure (10) est constante le long dudit axe (X-X).

19. Rayon (1) selon la revendication 1, **caractérisé en ce que** ladite première extrémité (3) est filetée.

20. Rayon (1) selon la revendication 1, **caractérisé en ce que** ladite deuxième extrémité (5) comporte une tête élargie (9) apte à être reçue dans un siège correspondant (7a) dudit moyeu (7).

21. Rayon (1) selon la revendication 20, **caractérisé en ce que** ladite tête élargie (9) a un profil aplati.

22. Combinaison d'un rayon (1) selon la revendication 1 et d'un élément d'étanchéité (30) comprenant un corps principal (31) muni d'un trou traversant (32) apte à recevoir une partie dudit corps allongé (2) dudit rayon (1).

23. Combinaison selon la revendication 22, **caractérisée en ce que** ledit trou traversant (32) est fermé de manière périphérique.

24. Combinaison selon la revendication 22, **caractérisée en ce que** ledit trou traversant (32) est défini par une surface d'une forme correspondant à la surface extérieure dudit corps allongé (2).

25. Combinaison selon la revendication 22, **caractérisée en ce que** l'élément d'étanchéité (30) comprend un collier (33) formé à une extrémité (31 b) dudit corps principal (31) et apte à être introduit dans le trou (26) pour l'attachement dudit rayon (1) à ladite jante (4).

26. Combinaison selon la revendication 22, **caractérisée en ce que** l'élément d'étanchéité (30) est constitué d'un matériau plastique

27. Roue de bicyclette (W) **caractérisée en ce qu'**elle comprend une pluralité de rayons (1) selon l'une quelconque des revendications 1 à 21.

28. Roue de bicyclette (W) selon la revendication 27, **caractérisée en ce qu'**elle comprend également un élément d'étanchéité (30) selon la revendication 22 agencé entre ladite zone de taille supérieure (10) dudit rayon (1) et la surface périphérique intérieure (4a) de ladite jante (4) de ladite roue (W).

29. Roue de bicyclette (W) selon la revendication 27, **caractérisée en ce qu'**elle comprend des moyens d'attachement et/ou d'ajustement (20) dudit rayon (1) sur ladite jante (4).

30. Roue de bicyclette (W) selon la revendication 29, **caractérisée en ce que** lesdits moyens d'attachement se composent d'un écrou (20).

31. Roue de bicyclette (W) selon la revendication 29, **caractérisée en ce que** lesdits moyens d'attachement (20) se composent d'un mamelon.

32. Procédé pour fabriquer un rayon (1) pour une roue de bicyclette (W), ledit rayon comprenant un corps allongé (2) qui s'étend le long d'un axe (X-X), entre une première extrémité (3) apte à être fixée à la jante (4) de la roue (W) et une deuxième extrémité (5) apte à être fixée au moyeu (7) de la roue (W), **caractérisé en ce qu'**il comprend les étapes consistant à :
- découper un filament de coupe circulaire d'une longueur prédéterminée dans un fil de matériau métallique dans un état recuit ;
- former le filament pour obtenir un profil de géométrie variable entre la première zone d'extrémité (3) et la deuxième zone d'extrémité (5), ledit filament ayant, à proximité de ladite première zone d'extrémité (3), une zone (10) d'une taille supérieure à la taille de ladite deuxième zone d'extrémité (5), dans lequel ladite zone (10) de taille supérieure augmente progressivement en taille en s'approchant de ladite première extrémité (3) ;
- calibrer la longueur du rayon (1) ;
- effectuer un traitement thermique d'adoucissement par tirage pour accroître les caractéristiques mécaniques du rayon (1) ;
- fileter ladite première extrémité (3) pour l'attachement à la jante (4) dudit rayon (1).

33. Procédé selon la revendication 32, **caractérisé en ce que** ladite étape consistant à former le filament est effectuée par déformation plastique à chaud ou à froid.

34. Procédé selon la revendication 33, **caractérisé en ce que** ladite déformation plastique à froid est effectuée par martelage,

35. Procédé selon la revendication 32, **caractérisé en ce qu'**il comprend une étape consistant à écraser ledit filament après ladite étape de formage du filament.

36. Procédé selon la revendication 35, **caractérisé en ce que** ladite étape d'écrasement est effectuée par moulage.

37. Procédé selon la revendication 35, **caractérisé en ce que** ladite étape d'écrasement est effectuée par laminage.

38. Procédé selon la revendication 32, **caractérisé en ce qu'**il comprend une étape consistant à former ladite deuxième extrémité (5) pour obtenir la forme d'attachement souhaitée au moyeu (7).

39. Procédé selon la revendication 32, **caractérisé en ce que** la surface de la coupe dudit fil est égale à la surface souhaitée de la coupe transversale de ladite deuxième extrémité (5) pour l'attachement au moyeu (7).

40. Procédé selon la revendication 32, **caractérisé en ce que** la surface de la coupe dudit fil est égale à la surface de la coupe transversale de ladite première extrémité (3) pour l'attachement à la jante (4).

41. Procédé selon la revendication 38 ou 39, **caractérisé en ce que** ladite étape de formage de ladite deuxième extrémité (5) est effectuée par moulage.

42. Procédé selon la revendication 38 ou 40, **caractérisé en ce que** ladite étape de formage de ladite deuxième extrémité (5) est effectuée par renversement.

43. Procédé selon la revendication 32, **caractérisé en ce que** ladite étape de filetage est effectuée par cylindrage.

44. Procédé selon la revendication 32, **caractérisé en ce que** ladite étape de filetage est effectuée par enlèvement de copeaux.

45. Procédé selon la revendication 32, **caractérisé en ce qu'**il comprend un traitement de protection de surface d'extrémité.

46. Procédé selon la revendication 45, **caractérisé en ce que** ledit traitement de protection de surface d'extrémité est une anodisation.

47. Procédé selon la revendication 45, **caractérisé en ce que** ledit traitement de protection de surface d'extrémité est une peinture.

48. Procédé selon la revendication 32, **caractérisé en ce qu'**il comprend en outre des étapes intermédiaires de traitement thermique de recuit.
